# EUROPÄISCHE PATENTANMELDUNG

(11) **EP 0 582 334 A1**
(43) Veröffentlichungstag der Anmeldung: **09.02.1994**
(21) Anmeldenummer: 93202142.1
(22) Anmeldetag: 21.07.1993
(51) Int. Cl.: B60R 21/20

(54) **Gassack-Aufprallschutzeinrichtung für Kraftfahrzeuge**

(30) Priorität: 07.08.1992 DE 4226103
(71) Anmelder: PARS Passive Rückhaltesysteme GmbH, 63755 Alzenau (DE)
(72) Erfinder: Herold, Jürgen, D-63743 Aschaffenburg (DE)
(74) Vertreter: Rieger, Harald, Dr.

(57) **Zusammenfassung**

Bei Kraftfahrzeugen ist im Lenkrad und im Armaturenbrett (16) eine Gassack-Aufprallschutzeinrichtung angeordnet. Um das Gesamtsystem zu vereinfachen, ist der im Lenkrad integrierte Gassack (9) an einem mit den Lenkradspeichen (2) verbundenen Arretierungsblech (7) befestigt, das konzentrisch zu einer am lenkradseitigen Innenrand der Lenksäule (10), deren lenkradseitiger Endabschnitt eine zylinderförmige Erweiterung (11) mit einem dem Innendurchmesser des Arretierungsblechs (7) entsprechenden Innendurchmesser besitzt, angebrachten ringförmigen Dichtlippe (13) verläuft, wobei der hinter dem Armaturenbrett (16) befindliche Gassack (21) an einem gestellfesten Arretierungsblech (18) angebracht ist und ein im Frontteil des Kraftfahrzeugs gestellfester Gasgenerator (22) über jeweils eine Gaszuleitung (23,24) mit der Erweiterung (11) der Lenksäule (10) und mit einer Durchbrechung (19) des beifahrerseitigen Arretierungsblechs (18) fest verbunden ist.

## Beschreibung

Die Erfindung betrifft eine Gassack-Aufprallschutzeinrichtung für Kraftfahrzeuge, bestehend aus einem im Lenkrad über der gegenüber der Horizontalebene des Lenkradkranzes versenkten Lenkradnabe und einem auf der Beifahrerseite hinter einer im Armaturenbrett befindlichen Austrittsöffnung eingefügten, mit einer Kappe mit definierter Sollreißlinie abgedeckten, durch einen entsprechenden Fahrzeugpuls aufblasbaren Gassack.

Beim Aufprall eines Kraftfahrzeugs auf ein massives Hindernis wird infolge der rotatorischen Vorwärtsbewegung des Oberkörpers der Fahrzeuginsassen aufgrund der starken Fahrzeugverzögerung der Aufprall insbesondere des Kopfs und des Brustkorbs des Fahrers auf das Lenkrad und des Beifahrers auf das Armaturenbrett bzw. gegen die Windschutzscheibe trotz angelegter Sicherheitsgurte nur unzureichend verhindert. Daraus hat sich die Entwicklung von im Lenkrad bzw. im Bereich des Armaturenbretts integrierter Gassack-Aufprallschutzeinrichtungen für Fahrer und Beifahrer ergeben.

Gassack-Aufprallschutzeinrichtungen sind i.a. so aufgebaut, daß beim Auftreffen des Fahrzeugs auf ein massives Hindernis nach der ersten Berührung der Insasse aufgrund seiner Massenträgheit nach vorn zu rutschen beginnt. Nach etwa 10 ms fängt der Gassack an sich aufzublasen, indem der Zündstrom auf den Zünder des Gasgenerators, der wiederum die Zündpille und damit den Treibsatz zündet, geschaltet wird. Nach Filterung und Abkühlung gelangt das Gas in den Gassack. Nach 40 bis 50 ms schlägt der Oberkörper auf den nun voll aufgeblasenen Gassack, dessen Aufblaszeit ca. 30 ms beträgt, auf. Über Ausströmöffnungen läßt der Gassack sofort das Gas genau definiert wieder entweichen, wobei der Körper des Fahrers bzw. Beifahrers weich und ohne große Rückprallkräfte aufgefangen wird.

Von dem aus Sensoren, Diagnosegerät, Auslösegerät, Gasgenerator und Gassack sowie Kabel- und Steckverbindungen zur Energieversorgung gebildeten Gesamtsystem der Gassack-Aufprallschutzeinrichtung wird verlangt, daß es wenigstens 15 Jahre unter allen möglichen Bedingungen, wie Feuchtigkeit, extreme Temperaturen und Erschütterungen, mit höchster Zuverlässigkeit arbeitet. Um im Ernstfall Defekte und Störungen in den Bauteilen auszuschließen bzw. diese rechtzeitig zu erkennen, unterliegt das System einer ständigen Überwachung mittels eines elektronischen Diagnosegerätes mit Fehleranzeige.

I.a. sind der Gassack und der Gasgenerator im Lenkrad integriert, so daß die Stromübertragung von der gestellfesten Lenkradsäule auf das Drehbewegungen ausführende Lenkrad über Schleifring bzw. Wickelfeder erfolgt. Außerdem enthält das Lenkrad zusätzlich interne Kabel- und Steckverbindungen für den elektrischen Anschluß des Gasgenerators. Umwelteinflüsse, wie Feuchtigkeit, Temperaturschwankungen und Fremdstoffbenetzung, müssen bei den Stromübertragungsschnittstellen entwicklungsseitig berücksichtigt werden. Abgesehen davon, daß das Gewicht und damit das Massenträgheitsmoment des Lenkrads durch den darin integrierten Gasgenerator und den Gassack nicht unerheblich erhöht wird, sind insbesondere für die zuverlässigen und störungsfreien Kabel- und Steckverbindungen zwischen Lenksäule und Lenkrad besondere Aufwendungen nötig. Die auf der Beifahrerseite hinter einer im Armaturenbrett vorhandenen Austrittsöffnung angebrachte Gassack-Aufprallschutzeinrichtung bedarf zwar eines vergleichsweise etwas geringeren Aufwands, da der Gassack und die Gasgeneratoren keinen Drehbewegungen unterliegen.

Nachteilig ist jedoch, daß das gegenüber dem im Lenkrad integrierten Gassack größere Gasvolumen, bedingt durch die größere Distanz zwischen Beifahrer und dem Armaturenbrett bzw. Windschutzscheibe, durch die Verwendung von zwei Gasgeneratoren auszugleichen ist.

Es ist die Aufgabe vorliegender Erfindung, bei der eingangs beschriebenen Gassack-Aufprallschutzeinrichtung das Gesamtsystem zu vereinfachen, insbesondere die Anzahl der Kabel- und Steckverbindungen deutlich zu reduzieren.

Die Lösung dieser Aufgabe besteht darin, daß der im Lenkrad untergebrachte Gassack mit dem die Gaseintrittsöffnung begrenzenden Rand an einem ringförmigen, mit den Lenkradspeichen verbundenen Arretierungsblech, das konzentrisch zu einer am lenkradseitigen Innenrand der Lenksäule, deren lenkradseitiger Endabschnitt eine zylinderförmige Erweiterung mit einem dem Innendurchmesser des Arretierungsblechs entsprechenden Innendurchmesser besitzt, angebrachten ringförmigen Dichtlippe unter Bildung eines engen, die relative Beweglichkeit zwischen Arretierungsblech und Dichtlippe ermöglichenden Spalts verläuft, befestigt ist und der hinter dem Armaturenbrett befindliche Gassack mit dem die Gaseintrittsöffnung begrenzenden Rand am Rand einer in einem gestellfesten Arretierungsblech angebrachten Durchbrechung befestigt ist und ein im Frontteil des Kraftfahrzeugs gestellfester Gasgenerator über jeweils eine Gaszuleitung mit einer im Boden der zylinderförmigen Erweiterung des lenkradseitigen Endabschnitts der Lenksäule vorhandenen Durchbrechung und mit der Durchbrechung des beifahrerseitigen Arretierungsblechs fest verbunden ist.

Eine unterschiedliche Aufblaszeit bzw. Aufblascharakteristik des Gassacks im Lenkrad und desjenigen im Armaturenbrett läßt sich durch entsprechendes Positionieren des zentralen Gasgenerators und damit der Länge der Gasleitungen erreichen.

Zweckmäßigerweise besitzt das an den Lenkradspeichen angeschlagene Arretierungsblech die Form einer Hutmanschette, deren Flansch an den Lenkradspeichen angebracht ist und deren mit der Dichtlippe einen engen Spalt bildender Schenkel parallel zur Lenkungsachse verläuft.

Im Rahmen der besonderen Ausgestaltung der Erfindung ist der Gasgenerator im Mitteltunnelbereich des Kraftfahrzeugs eingebaut. Damit bietet sich die Möglichkeit einer mechanischen Auslösung des Gasgenerators, da der Fahrzeugpuls unmittelbar auf den Gasgenerator selbst übertragen wird.

Die Erfindung ist nachfolgend anhand einer Zeichnung, die eine Teilansicht eines durch die schrägliegende Lenkungsachse geführten Schnitts darstellt, näher und beispielhaft erläutert.

Die gegenüber der Horizontalebene des Lenkradkranzes (1) versenkt angeordnete, mit diesem über Lenkradspeichen (2) verbundene Lenkradnabe (3) ist mit dem Ende der Lenkwelle (4) über die Schraubenmutter (5) verspannt. Die Lenkradspeichen (2) und der Lenkradkranz (1) sind mit einer PU-Integralschaumschicht (6) umhüllt. An den Lenkradspeichen (2) ist ein hutmanschettenförmiges Arretierungsblech (7) für den die Gaseintrittsöffnung (8) des zusammengefalteten Gassacks (9) begrenzenden Rand, der durch Nieten mit dem Flansch des Arretierungsblechs (7) verbunden ist, mittels Nieten befestigt. Der lenkradseitige Endabschnitt der Lenksäule (10) besitzt eine zylinderförmige Erweiterung (11), deren Boden eine Durchbrechung (12) aufweist. Am lenkradseitigen Innenrand der Erweiterung (11) der Lenksäule (10) ist eine ringförmige elastische Lippe (13) angebracht, die unter Bildung eines engen Spalts konzentrisch zum Schenkel des hutmanschettenförmigen Arretierungsblechs (7) für den Gassack (9) verläuft. Die Abdeckkappe (14) für den Gassack (9) ist an mit dem Flansch des Arretierungsblechs (7) verbundene schenkelartige Befestigungselemente (15) angeschlagen. Hinter der im Armaturenbrett (16) befindlichen Austrittsöffnung (17) ist ein Arretierungsblech (18) gestellfest angebracht. Am Rand der Durchbrechung (19) des Arretierungsblechs (18) ist der die Gaseintrittsöffnung des zusammengefalteten, mit einer am Arretierungsblech (18) befestigten Kappe (20) abgedeckten Gassacks (21) begrenzender Rand befestigt. Im Frontteil des Kraftfahrzeugs befindet sich ein gestellfester Gasgenerator (22), von dem Gaszuleitungen (23, 24) zu der Durchbrechung (12) der Erweiterung (11) des lenkradseitigen Endabschnitts der Lenksäule und zu der Durchbrechung (19) des beifahrerseitig eingefügten Arretierungsblechs (18) verlaufen. Die Stromzufuhr für den Gasgenerator (22) erfolgt über die Kabel (25).

Im Falle des Aufpralls des Fahrzeugs auf ein massives Hindernis wird der Gasgenerator (22) gezündet. Durch das über die Gaszuleitungen (23, 24) ausströmende Gas entsteht ein Innendruck in den Gassäcken (9, 21), der im Lenkrad ein Anlegen der Dichtlippe (13) an den Schenkel des Arretierungsblechs (7) und damit eine völlige Abdichtung des Innenraums sowie ein Öffnen der Abdeckkappen (14, 20) definiert entlang von Sollreißlinien bewirkt, so daß sich die Gassäcke (9, 21) durch die infolge des seitlichen Wegklappens der Abdeckkappenteile entstandene Öffnung in das Fahrzeuginnere (26) hinein entfalten können und die Oberkörper bzw. Köpfe des verlagerten Fahrers und Beifahrers in die voll aufgeblasenen Gassäcke eintauchen können und abgebremst werden.

Die mit der erfindungsgemäß gestalteten Gassack-Aufprallschutzeinrichtung erreichbaren Vorteile sind insbesondere darin zu sehen, daß durch das gestellfeste Anbringen eines zentralen Gasgenerators ein Gasgenerator und ein Kontaktübertragungssystem (Lenksäule/Lenkrad) entfallen. Für einen zentralen Gasgenerator ist nur noch ein Zündausgang der Elektronik erforderlich, so daß diesbezüglich Anschlußkabel und Steckverbindungen entfallen. Durch die Reduzierung der Teilezahl werden Störungen im Gesamtsystem minimiert. Die Abdichtung zwischen der Lenksäule und dem Lenkrad mittels der Dichtlippe erfolgt in Millisekunden und beeinflußt deshalb das Lenkverhalten im Unfallzeitpunkt nur unbedeutend.

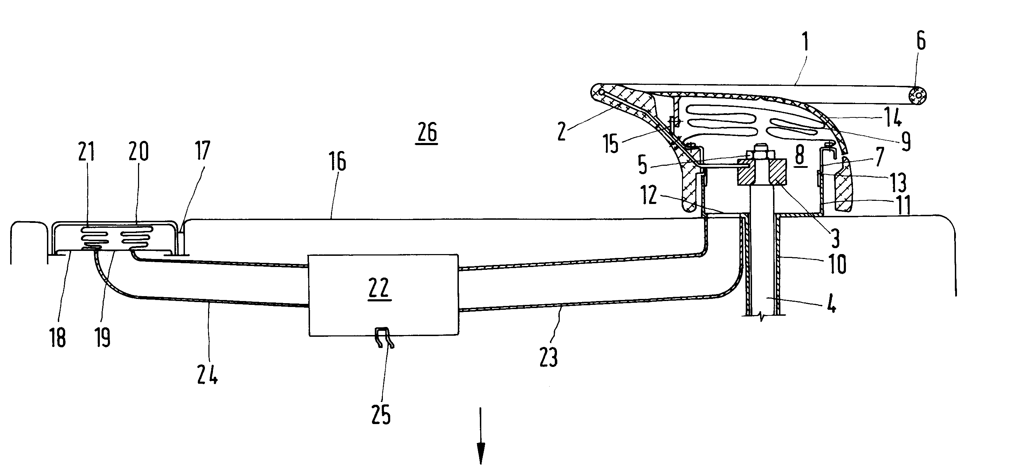

## Patentansprüche

1. Gassack-Aufprallschutzeinrichtung für Kraftfahrzeuge, bestehend aus einem im Lenkrad über der gegenüber der Horizontalebene des Lenkradkranzes (1) versenkten Lenkradnabe (3) und einem auf der Beifahrerseite hinter einer im Armaturenbrett (16) befindlichen Austrittsöffnung (17) eingefügten, zusammengefalteten, mit einer Kappe (14) mit definierter Sollreißlinie abgedeckten, durch einen Fahrzeugpuls aufblasbaren Gassack (9), dadurch gekennzeichnet, daß der im Lenkrad integrierte Gassack mit dem die Gaseintrittsöffnung (8) begrenzenden Rand an einem ringförmigen, mit den Lenkradspeichen (2) verbundenen Arretierungsblech (7), das konzentrisch zu einer am lenkradseitigen Innenrand der Lenksäule (10), deren lenkradseitiger Endabschnitt eine zylinderförmige Erweiterung (11) mit einem dem Innendurchmesser des Arretierungsblechs entsprechenden Innendurchmesser besitzt, angebrachten ringförmigen Dichtlippe (13) unter Bildung eines engen, die relative Beweglichkeit zwischen Arretierungsblech und Dichtlippe ermöglichenden Spalts verläuft, befestigt ist und der hinter dem Armaturenbrett (16) befindliche Gassack (21) mit dem die Gaseintrittsöffnung begrenzenden Rand am Rand einer in einem gestellfesten Arretierungsblech (18) angebrachten Durchbrechung (19) angebracht ist und ein im Frontteil des Kraftfahrzeugs gestellfester Gasgenerator (22) über jeweils eine Gaszuleitung (23, 24) mit einer im Boden der zylinderförmigen Erweiterung des lenkradseitigen Endabschnitts der Lenksäule vorhandenen Durchbrechung (12) und mit der Durchbrechung des beifahrerseitigen Arretierungsblechs fest verbunden ist.

2. Gassack-Aufprallschutzeinrichtung nach Anspruch 1, dadurch gekennzeichnet, daß das am Lenkrad befestigte Arretierungsblech (7) die Form einer Hutmanschette besitzt, deren Flansch an den Lenkradspeichen (2) angebracht ist und deren mit der Dichtlippe (13) einen engen Spalt bildender Schenkel parallel zur Lenkungsachse verläuft.

3. Gassack-Aufprallschutzeinrichtung nach Anspruch 1 und Anspruch 2, dadurch gekennzeichnet, daß der Gasgenerator (22) im Mitteltunnelbereich des Kraftfahrzeugs angeordnet ist.

4. Gassack-Aufprallschutzeinrichtung nach einem der Ansprüche 1 bis 3, dadurch gekennzeichnet, daß die Länge der Gasleitung (23) zwischen Gasgenerator (22) und dem Eintritt in die Erweiterung (11) des lenkradseitigen Endabschnitts der Lenksäule (10) kleiner als die Länge der Gasleitung (24) zwischen Gasgenerator und dem Eintritt in die Durchbrechung (19) des Arretierungsblechs (18) für den beifahrerseitigen Gassack (21) ist.
